(19)

Europäisches
Patentamt
European
Patent Office
Office européen
des brevets

(11) **EP 4 589 029 A1**

(12) **EUROPEAN PATENT APPLICATION**
published in accordance with Art. 153(4) EPC

(43) Date of publication:
**23.07.2025 Bulletin 2025/30**

(21) Application number: **22958739.9**

(22) Date of filing: **13.09.2022**

(51) International Patent Classification (IPC):
**C21D 9/28** (2006.01)    **C21D 1/10** (2006.01)

(52) Cooperative Patent Classification (CPC):
**C21D 1/10; C21D 9/28;** Y02P 10/25

(86) International application number:
**PCT/JP2022/034239**

(87) International publication number:
**WO 2024/057405 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON STEEL CORPORATION
Chiyoda-ku
Tokyo 100-8071 (JP)**

(72) Inventors:
• **YAMANE, Akihito
Tokyo 100-8071 (JP)**
• **HATA, Toshiyuki
Tokyo 100-8071 (JP)**
• **KOZUKA, Chihiro
Tokyo 100-8071 (JP)**

(74) Representative: **Zimmermann & Partner
Patentanwälte mbB
Postfach 330 920
80069 München (DE)**

(54) **TRAVERSE HARDENING METHOD AND TRAVERSE HARDENING DEVICE**

(57) There is provided a traverse hardening method including: rotating a shaft-like body (10) inserted inside a plurality of high-frequency coils (111) relative to the plurality of high-frequency coils (111) and moving the plurality of high-frequency coils (111) relative to the shaft-like body (10) in an axial direction to perform traverse hardening using a traverse hardening apparatus (100) including the plurality of high-frequency coils while moving a plurality of heating regions formed on a surface of the shaft-like body (10) by the plurality of high-frequency coils (111); and changing at least one of a movement velocity of the plurality of high-frequency coils (111) relative to the shaft-like body (10) in the axial direction and a rotational velocity of the shaft-like body (10) relative to the plurality of high-frequency coils (111) such that a plurality of heating zones through which the plurality of heating regions pass overlap with each other or are adjacent to each other.

FIG. 1

Processed by Luminess, 75001 PARIS (FR)

**EP 4 589 029 A1**

## Description

### TECHNICAL FIELD

The present invention relates to a traverse hardening method and a traverse hardening apparatus.

### BACKGROUND ART

Various surface treatments may be performed on a component that is made of steel and required to have a long life. Particularly, since induction hardening improves a surface hardness, wear resistance, and fatigue resistance of a surface of a component, the induction hardening is widely used. For this reason, various induction hardening apparatuses have been proposed so far. For example, in a case where induction hardening is to be performed on a long member such as a shaft-like body made of steel, so-called traverse hardening is performed. The traverse hardening is a method of performing hardening while moving high-frequency induction heating coils (also referred to as high-frequency coils) and a cooling unit relative to a shaft-like body in an axial direction of the shaft-like body.

In the traverse hardening, the shaft-like body is locally heated by the high-frequency coils until at least a surface layer of the shaft-like body becomes an austenite phase. Next, a cooling medium such as cooling liquid is sprayed onto the surface of the heated shaft-like body by a cooling unit, which is caused to follow the high-frequency coils, to rapidly cool the surface of the heated shaft-like body in a short amount of time, so that the surface layer of the shaft-like body has a structure having a desired hardness such as a martensite phase.

The shaft-like body may have an outer diameter that is not constant in a direction along an axis thereof (also referred to as an axial direction). That is, there is a shaft-like body that includes a small-diameter portion having a relatively small outer diameter and a large-diameter portion having a relatively large outer diameter in an axial direction of the shaft-like body. Further, the small-diameter portion and the large-diameter portion are connected to each other by a level difference portion of which the outer diameter is gradually changed in the axial direction. For example, in a technique disclosed in Patent Document 1 or Patent Document 2, split coils are advanced or retracted in a radial direction of a shaft-like body, which is a body to be heated, to cope with a change in an outer diameter dimension of the shaft-like body.

However, in a case where split coils have been used in the related art, there has been a case where irregular hardening occurred in the axial direction and a circumferential direction of the shaft-like body. As a result of extensive research, the present inventors have found that, in a case where heating zones of adjacent coils are separated from each other, hardening is not performed at separated portions which causes irregular hardening.

### Citation List

#### Patent Documents

Patent Document 1: Japanese Unexamined Patent Application, First Publication No. 2008-150640
Patent Document 2: Japanese Patent Publication No. S36-10457

### SUMMARY OF INVENTION

#### Technical Problem

The present invention has been achieved in view of the above circumstances, and an object of the present invention is to provide a traverse hardening method and a traverse hardening apparatus that can reduce irregular heating in an axial direction and a circumferential direction of a shaft-like body.

#### Solution to problem

(1) A traverse hardening method according to an aspect of the present invention is a traverse hardening method of performing hardening on a shaft-like body using a traverse hardening apparatus including a plurality of high-frequency coils. The traverse hardening method includes: rotating the shaft-like body inserted inside the plurality of high-frequency coils relative to the plurality of high-frequency coils and moving the plurality of high-frequency coils relative to the shaft-like body in an axial direction to perform traverse hardening while moving a plurality of heating regions formed on a surface of the shaft-like body by the plurality of high-frequency coils; and changing at least one of a movement velocity of the plurality of high-frequency coils relative to the shaft-like body in the axial direction and a rotational velocity of the shaft-like body relative to the plurality of high-frequency coils such that a plurality of heating zones through which the plurality of heating regions pass overlap with each other or are adjacent to each other.
(2) In the traverse hardening method according to (1), in a case where an angular velocity of the shaft-like body relative to the plurality of high-frequency coils is denoted by $\omega$, the movement velocity is denoted by vl, a length of the heating region in the axial direction is denoted by T, a distance between the heating regions adjacent to each other in a circumferential direction of the shaft-like body is denoted by wo, and a radius of the shaft-like body on which the heating regions are positioned is denoted by R, Expression 1 may be satisfied.

$$(vl/\omega R) \times wo \leq T \ldots \text{Expression 1}$$

(3) In the traverse hardening method according to (1) or (2), a temperature of the heating region may be 850°C or higher.

(4) A traverse hardening apparatus according to another aspect of the present invention is a traverse hardening apparatus that performs hardening on a shaft-like body. The traverse hardening apparatus includes a plurality of high-frequency coils and a cooling unit that are provided in an axial direction, and a control unit that is configured to control movement of the plurality of high-frequency coils and the cooling unit. The control unit is configured to rotate the shaft-like body inserted inside the plurality of high-frequency coils relative to the plurality of high-frequency coils and moves the high-frequency coils relative to the shaft-like body in the axial direction to perform traverse hardening while moving a plurality of heating regions formed on a surface of the shaft-like body by the plurality of high-frequency coils, and to perform a control to change at least one of a movement velocity of the plurality of high-frequency coils relative to the shaft-like body in the axial direction and a rotational velocity of the shaft-like body relative to the plurality of high-frequency coils such that a plurality of heating zones through which the plurality of heating regions pass overlap with each other or are adjacent to each other.

(5) In the traverse hardening apparatus according to (4), in a case where an angular velocity of the shaft-like body relative to the plurality of high-frequency coils is denoted by $\omega$, the movement velocity is denoted by vl, a length of the high-frequency coil in the axial direction is denoted by T', a distance between high-frequency induction portions of the high-frequency coils adjacent to each other in a circumferential direction of the shaft-like body is denoted by wo', and a radius of a circle inscribed in the plurality of high-frequency coils is denoted by R', the control unit may be configured to control the movement velocity and/or the rotational velocity to satisfy Expression 2.

$$(vl/\omega R') \times wo' \leq T' \ldots \text{Expression 2}$$

(6) In the traverse hardening apparatus according to (4) or (5), a temperature of the heating region may be 850°C or higher.

Advantageous Effects of Invention

According to the traverse hardening method and the traverse hardening apparatus of the aspects of the present invention, it is possible to reduce irregular heating in the axial direction and the circumferential direction of the shaft-like body.

BRIEF DESCRIPTION OF DRAWINGS

[FIG. 1] A partially cutaway view of a traverse hardening apparatus according to an embodiment of the present invention and a side view schematically showing the traverse hardening apparatus.

[FIG. 2] A cross-sectional view schematically showing a partial cross section of a shaft-like body and two high-frequency coils in a plan view viewed in a direction along an axis of the shaft-like body, and a view showing a state in which the high-frequency coils are moved to correspond to an outer diameter of a small-diameter portion.

[FIG. 3] A cross-sectional view schematically showing a partial cross section of the shaft-like body and the two high-frequency coils in a plan view viewed in the direction along the axis of the shaft-like body, and a view showing a state in which the high-frequency coils are moved to correspond to an outer diameter of a large-diameter portion.

[FIG. 4] A cross-sectional view schematically showing a partial cross section of the shaft-like body and three high-frequency coils in a plan view viewed in the direction along the axis of the shaft-like body, and a view showing a state in which the high-frequency coils are moved to correspond to the outer diameter of the small-diameter portion.

[FIG. 5] A cross-sectional view schematically showing a partial cross section of the shaft-like body and the three high-frequency coils in a plan view viewed in the direction along the axis of the shaft-like body, and a view showing a state in which the high-frequency coils are moved to correspond to the outer diameter of the large-diameter portion.

[FIG. 6] A schematic perspective view showing a positional relationship between a heating unit and a cooling unit and the shaft-like body of the embodiment of the present invention.

[FIG. 7] A schematic cross-sectional view showing a heating temperature range of the shaft-like body.

[FIG. 8] A schematic perspective view showing a heat generation density range of the shaft-like body.

[FIG. 9] A schematic cross-sectional view showing a field intensity range and a heating temperature range of the shaft-like body.

[FIG. 10] A schematic cross-sectional view showing a field intensity range and a heating temperature range of the shaft-like body.

[FIG. 11] A view showing heating regions and heating zones that are formed on a surface of the shaft-like body in the embodiment of the present invention, and a perspective view schematically showing the shaft-like body.

[FIG. 12] A view showing the heating regions and the heating zones that are formed on a surface of the shaft-like body in the embodiment of the present invention, and a developed view in which the surface of the shaft-like body is developed.

[FIG. 13] A view showing a state in which two heating zones overlap with each other in the embodiment of the present invention, and a developed view in which the surface of the shaft-like body is developed.

[FIG. 14] A view showing a state in which two heating zones are adjacent to each other in the embodiment of the present invention, and a developed view in which the surface of the shaft-like body is developed.

[FIG. 15] A block diagram showing a traverse hardening apparatus according to the embodiment of the present invention.

[FIG. 16] A view showing analysis results of a numerical simulation according to Experimental example 1, and a view showing a state in which the surface of the shaft-like body is heated.

[FIG. 17] A view showing analysis results of a numerical simulation according to Experimental example 2, and a view showing a state in which the surface of the shaft-like body is heated.

DESCRIPTION OF EMBODIMENTS

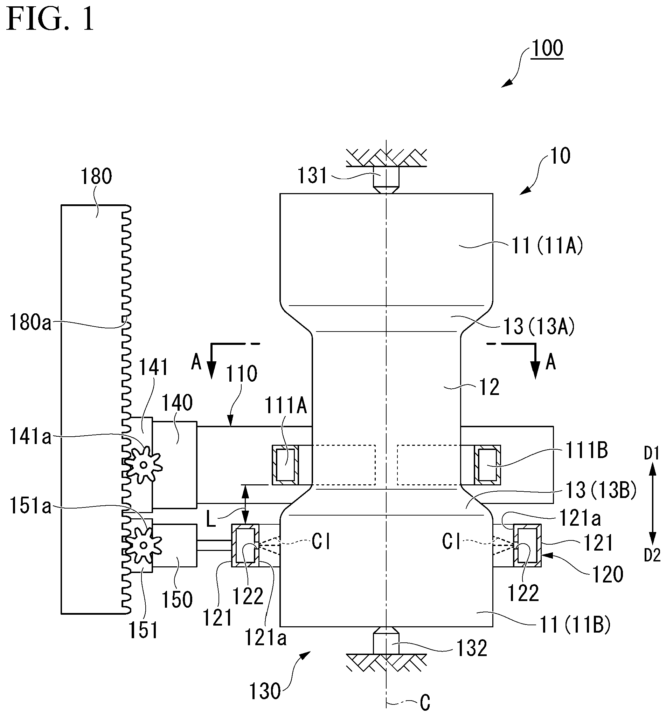

A traverse hardening method and a traverse hardening apparatus, which are embodiments of the present invention, will be described below with reference to FIGS. 1 to 15. It is obvious that the present invention is not limited to the following embodiments. Further, it is obvious that the respective elements of the following embodiments can be combined within the scope of the present invention.

As shown in FIG. 1, a traverse hardening apparatus 100 according to the present embodiment is a device for performing traverse hardening on a shaft-like body 10 using a high-frequency current. The traverse hardening is a method of hardening a body to be heated while moving a heating unit that includes high-frequency induction heating coils (also referred to as high-frequency coils) and a cooling unit, which includes a cooling ring following the heating unit, relative to the body to be heated. The body to be heated is, for example, a shaft-like body.

(Shaft-like body)

The shaft-like body 10 of the present embodiment includes a large-diameter portion 11 (large-diameter portions 11A and 11B) and a small-diameter portion 12 that is provided between the large-diameter portions 11A and 11B in a direction along an axis C. Each of the large-diameter portions 11A and 11B and the small-diameter portion 12 is formed in a columnar shape. Each of the central axes of the large-diameter portions 11A and 11B and the small-diameter portion 12 is disposed to coincide with the axis C that is a common axis. In the present embodiment, the axis C is a central axis of the shaft-like body 10. Hereinafter, a portion disposed on one side D1 of the small-diameter portion 12 in the direction along the axis C is also referred to as a first large-diameter portion 11A. A portion disposed on the other side D2 of the small-diameter portion 12 in the direction along the axis C is also referred to as a second large-diameter portion 11B.

Each of the first large-diameter portion 11A, the small-diameter portion 12, and the second large-diameter portion 11B is formed in a columnar shape, and share the axis C as a common central axis. In a case where cross sections of the large-diameter portions 11A and 11B perpendicular to the axis C are viewed, an outer diameter of the small-diameter portion 12 is smaller than an outer diameter of each of the large-diameter portions 11A and 11B. In the present embodiment, the outer diameter of the large-diameter portion 11A and the outer diameter of the large-diameter portion 11B are set to be equal to each other, but the outer diameter of the large-diameter portion 11A and the outer diameter of the large-diameter portion 11B may be different from each other.

A level difference portion 13 (level difference portion 13A or 13B) for connecting the large-diameter portion 11A or 11B and the small-diameter portion 12 is provided between the large-diameter portion 11A or 11B and the small-diameter portion 12. The level difference portions 13A and 13B are inclined at a predetermined angle with respect to the axis C of the shaft-like body 10. An inclination angle is in a range of, for example, 15° to 90°. In a plane including the axis C of the shaft-like body 10, an outer diameter of the level difference portion 13 is not particularly limited and the level difference portion 13 may have a shape that allows the large-diameter portion 11 and the small-diameter portion 12 to be smoothly connected to each other as shown in FIG. 1. In the traverse hardening apparatus 100 according to the present embodiment, the shaft-like body 10 is disposed such that the axis C is parallel to an up-down direction of the traverse hardening apparatus 100.

The shaft-like body 10 is made of a conductive material such as low-alloy steel that contains 95% by weight or more of carbon steel or iron (Fe) having a ferrite phase or a pearlite phase. The shaft-like body may be an axle for a railway vehicle, or the like.

The numbers of the large-diameter portions 11, the level difference portions 13, and the like of the shaft-like body 10 are not limited to the example shown in FIG. 1. The number of each of the small-diameter portions 12, the large-diameter portions 11, and the level difference portions 13 may be 1, 2, or 3, or may be 4 or more. For example, the shaft-like body, which is an object for the traverse hardening method and the traverse hardening apparatus according to the present embodiment, may be a shaft-like body that includes one large-diameter portion and one small-diameter portion. Alternatively, the shaft-like body, which is an object for the traverse hardening method and the traverse hardening apparatus according to the present embodiment, may include either a large-diameter portion or a small-diameter portion.

(Traverse hardening apparatus)

The traverse hardening apparatus 100 includes a heating unit 110, a cooling unit 120, a support unit 130, a heating unit-moving device 140, a cooling unit-moving device 150, and a control unit 160.

As shown in FIG. 1, the heating unit 110 includes a plurality of high-frequency coils 111 (high-frequency coils 111A and 111B). The heating unit 110 is connected to the heating unit-moving device 140 that is a movement unit. The cooling unit 120 includes a cooling ring 121. The cooling unit 120 is connected to the cooling unit-moving device 150 that is a movement unit. The support unit 130 includes an upper center 131 and a lower center 132. The upper center 131 supports the first large-diameter portion 11A of the shaft-like body 10 from above the first large-diameter portion 11A. The lower center 132 supports the second large-diameter portion 11B of the shaft-like body 10 from below the second large-diameter portion 11B. The upper center 131 and the lower center 132 support the shaft-like body 10 such that one side D1 in a direction of the axis C is on an upper side and the other side D2 is on a lower side. The shaft-like body 10 is rotatable in a circumferential direction of the shaft-like body 10 around the axis C in a state of being supported by the upper center 131 and the lower center 132. The shaft-like body 10 can be rotated around the axis of the shaft-like body 10 via the upper center 131 and the lower center 132 by a drive device (not shown) during traverse hardening. The rotation of the shaft-like body 10 around the axis means that the shaft-like body 10 is rotated in any one of circumferential directions around the axis C of the shaft-like body 10. A line connecting the center of the upper center 131 and the center of the lower center 132 is in the up-down direction of the traverse hardening apparatus 100 (also referred to as the up-down direction).

The heating unit-moving device 140 supports the heating unit 110 and includes a support member 141 and a motor (not shown). The heating unit-moving device 140 is attached to a rack member 180. The rack member 180 extends in the up-down direction. Further, the support member 141 is provided with a pinion gear 141a, and the pinion gear 141a is engaged with a gear portion 180a of the rack member 180. In a case where the motor is driven, the pinion gear 141a is rotated and the heating unit-moving device 140 is configured to move up or down with respect to the rack member 180.

The cooling unit-moving device 150 supports the cooling unit 120 and includes a support member 151 and a motor (not shown). The cooling unit-moving device 150 is attached to the rack member 180. The support member 151 is provided with a pinion gear 151a, and the pinion gear 151a is engaged with the gear portion 180a of the rack member 180. In a case where the motor is driven, the pinion gear 151a is rotated and the cooling unit-moving device 150 is configured to move up or down with respect to the rack member 180.

The movement velocities of the heating unit-moving device 140 and the cooling unit-moving device 150 are independently controlled by the control unit 160. The heating unit-moving device 140 supporting the heating unit 110 and the cooling unit-moving device 150 supporting the cooling unit 120 are moved in the up-down direction, such that traverse hardening is performed in an axial direction of the shaft-like body 10. That is, the up-down direction of the traverse hardening apparatus 100 refers to a direction in which traverse hardening is performed.

An example in which a rack and a pinion gear are used as a moving mechanism for moving each of the heating unit 110 and the cooling unit 120 in the up-down direction is shown in FIG. 1. However, the moving mechanism of the present invention is not limited thereto and has only to be a mechanism that can move the heating unit 110 and the cooling unit 120 relative to the shaft-like body 10 in the up-down direction. Further, an example in which the heating unit 110 and the cooling unit 120 are moved with respect to the fixed shaft-like body 10 is shown in FIG. 1. However, the traverse hardening method and the traverse hardening apparatus according to the embodiments of the present invention are not limited thereto, and the heating unit 110 and the cooling unit 120 may be fixed and the shaft-like body 10 may be moved relatively. Furthermore, an example in which the axial direction of the shaft-like body 10 is directed in a vertical direction is assumed in FIG. 1. However, the traverse hardening method and traverse hardening apparatus according to the embodiments of the present invention are not limited thereto, and the axial direction of the shaft-like body 10 may be directed in a horizontal direction or may be inclined with respect to the vertical direction.

(Heating unit)

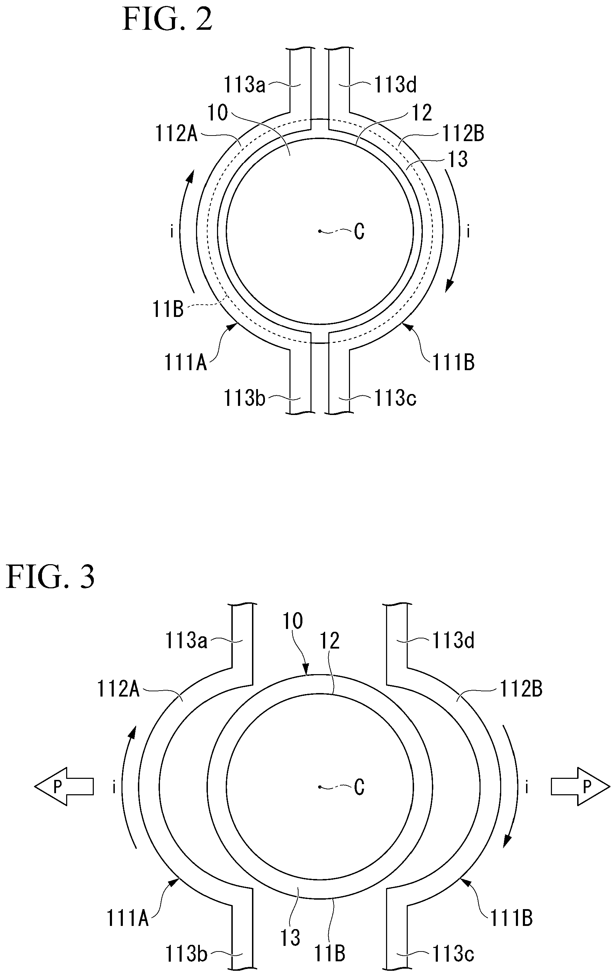

The heating unit 110 of the present embodiment includes the plurality of high-frequency coils. FIG. 2 shows a schematic plan view of the high-frequency coils 111A and 111B of the heating unit 110 and the shaft-like body 10 viewed in a direction A-A of FIG. 1 that is a direction along the axis C (a direction parallel to the axial direction). In FIG. 2, the shaft-like body 10 is shown in a state of being cut in the middle of the small-diameter portion 12. As shown in FIG. 2, the high-frequency coils 111A and 111B of the heating unit 110 include high-frequency induction portions 112A and 112B of which part are formed in a C shape to surround the shaft-like body 10 in a plan view viewed in a direction along the axis C of the shaft-like body 10. End portions of high-frequency induction portion 112A are connected to conductive portions 113a and 113b. Similarly, end portions of the high-frequency induction portion 112B are also connected to conductive portions 113c and 113d.

The high-frequency coils 111A and 111B are arranged to be separated from each other in the circumferential direction around the axis C of the shaft-like body 10 (also referred to as the circumferential direction). This circumferential direction is parallel to a direction in which the high-frequency induction portion 112A of the high-frequency coil 111A and the high-frequency induction portion 112B of the high-frequency coil 111B extend. That is, a plane in which the high-frequency induction portions 112A and 112B extend (also referred to as a horizontal plane) is perpendicular to the up-down direction of the traverse hardening apparatus 100. Further, the horizontal plane is perpendicular to the axial direction of the shaft-like body 10.

In the horizontal plane, the shapes of the high-frequency induction portion 112A of the high-frequency coil 111A and the high-frequency induction portion 112B of the high-frequency coil 111B may be arc shapes shown in FIG. 2. In a case where the shapes of the high-frequency induction portions 112A and 112B are arc shapes, there is an advantage in that the high-frequency coils 111 and the shaft-like body 10 are substantially uniformly close to each other in the circumferential direction.

In a case where the shapes of the high-frequency induction portions 112A and 112B are arc shapes, it is preferable that a diameter of an inscribed circle, which is in contact with each of inner surfaces (surfaces facing the shaft-like body 10) of the high-frequency induction portions 112A and 112B facing the axis C, in the above-described horizontal plane is larger than the outer diameter of the small-diameter portion 12 of the shaft-like body 10 and smaller than the outer diameter of the large-diameter portion 11.

Alternatively, one or both of the high-frequency induction portions 112A and 112B may form part of an elliptical shape in the above-described horizontal plane, or may have a shape formed by a plurality of straight lines. Further, the high-frequency coils 111A and 111B may have shapes in which part of the high-frequency coil 111A and part of the high-frequency coil 111B overlap with each other when viewed in the axial direction of the shaft-like body 10. For example, the conductive portions 113a and 113b shown in FIG. 2 may be positioned closer to the high-frequency induction portion 112B than the conductive portions 113d and 113c, respectively, and the high-frequency induction portions 112A and 112B may have shapes in which the high-frequency induction portions 112A and 112B overlap with each other in a case of being viewed in the axial direction of the shaft-like body 10. In this case, the high-frequency coils 111A and 111B are disposed at positions different from each other in the axial direction.

The conductive portions 113a and 113b and the conductive portions 113c and 113d extend from the end portions of the high-frequency induction portions 112A and 112B in a direction away from the shaft-like body 10, respectively. It is more preferable that each of the conductive portions 113a, 113b, 113c, and 113d extends in a direction orthogonal to the axis C of the shaft-like body 10 at a position where the high-frequency coils 111A and 111B are closest to each other.

Each of the high-frequency coils 111A and 111B can be moved in a direction in which the high-frequency coils 111A and 111B are separated from or approach the shaft-like body 10. FIG. 2 shows a state in which the high-frequency coils 111A and 111B are closest to the small-diameter portion 12 of the shaft-like body 10. It is preferable that the small-diameter portion 12 is heated in this state.

Meanwhile, FIG. 3 shows a state in which the high-frequency coils 111A and 111B are moved in directions in which the high-frequency coils 111A and 111B are separated from the shaft-like body 10 (directions P in FIG. 3) to correspond to the outer diameter of the large-diameter portion 11B and surround the large-diameter portion 11B of the shaft-like body 10. It is preferable that the large-diameter portion 11 is heated in this state. In the state shown in FIG. 3, the high-frequency coils 111A and 111B are moved in the direction of the axis C of the shaft-like body 10, and the high-frequency coils 111A and 111B are positioned at the position of the large-diameter portion 11 in the axial direction.

The conductive portions 113a and 113b of the high-frequency coil 111A are connected to a power source (not shown) and the high-frequency induction portion 112A is supplied with a high-frequency current from the power source, so that an induction current is generated in the shaft-like body 10 and Joule heat is generated in the shaft-like body 10 due to the electric resistance of the shaft-like body 10. The same applies to the high-frequency coil 111B. For example, a current flows in the high-frequency coils 111A and 111B in directions of arrows i shown in FIG. 2 and the like. A current flows in the plurality of high-frequency coils 111 in the same direction in the circumferential direction.

Each of the high-frequency coils 111A and 111B may be connected to the heating unit 110 via a coil movement unit (not shown). The coil movement unit includes a drive motor and a stage, and is configured to be capable of moving each of the high-frequency coils 111A and 111B in a direction orthogonal to the axis C of the shaft-like body 10, that is, in the horizontal plane. The movement of the high-frequency coils 111A and 111B in the horizontal plane is controlled by the control unit 160. The power source may be fixed to the heating unit 110 or may be moved together with the high-frequency coils 111 by the coil movement unit.

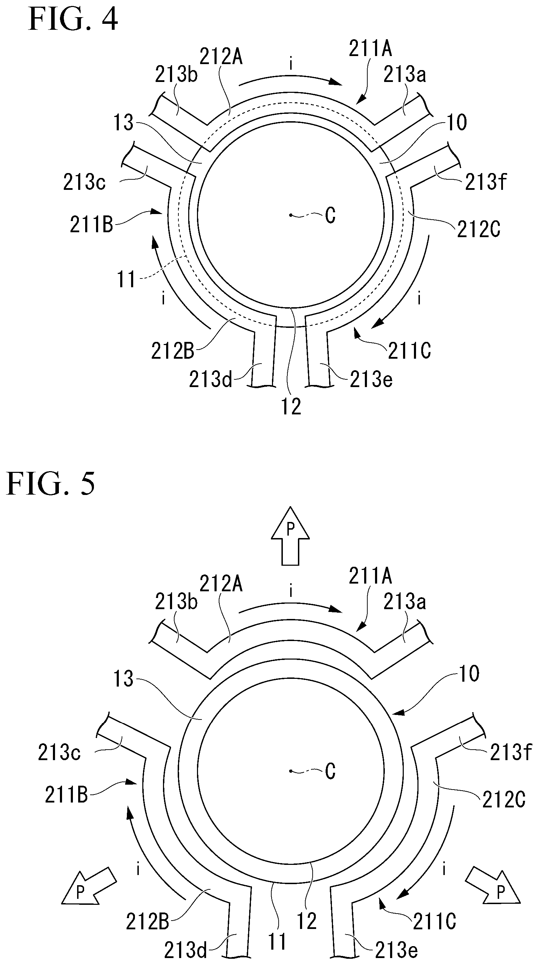

It is preferable that the number of the plurality of high-frequency coils 111 of the traverse hardening apparatus 100 is two from the viewpoint that a close portion where the high-frequency coils 111 and the shaft-like body 10 are close to each other can be made longest in the circumferential direction. Further, it is preferable that the number of the plurality of high-frequency coils 111 is three shown in FIGS. 4 and 5 from the viewpoint of preventing a gap between each high-frequency coil 111 and the shaft-like body 10 from being excessively increased even in a case where the close portions are made long and distances between the plurality of high-frequency coils 111 are reduced or increased to follow a change in the diameter of the shaft-like body 10. In a case where three high-frequency coils 211 (high-frequency coils 211A, 211B, and 211C) shown in FIGS. 4 and 5 are employed, the same configuration as in a case where the two high-frequency coils 111 and the heating unit 110 described above are used can be employed. The plurality of high-frequency coils 111 are disposed to be separated from each other in the horizontal plane. It is preferable that each of the plurality of high-frequency coils 111 is movable in a direction orthogonal to the axis C of the shaft-like body 10 on which traverse hardening is to be performed.

The cross section of each portion of the high-frequency coil 111 in an extension direction may have a rectangular shape shown in FIG. 1, or may have an elliptical shape or a circular shape. Further, the inside of the high-frequency coil 111 may be formed as a cavity, so that a cooling medium for cooling flows through the cavity.

It is preferable that the high-frequency coil 111 is made of a material such as copper since the material such as copper is non-magnetic, is less likely to cause an eddy-current loss, and is also less likely to cause a Joule loss due to small electric resistance. The surfaces of the high-frequency coils 111 may be covered with a material having heat resistance and high insulation properties such as bakelite or silicon so that a short circuit does not occur even in a case where the high-frequency coils 111 are in contact with each other or the high-frequency coils 111 and the shaft-like body 10 are in contact with each other.

For example, each of the conductive portions 113a, 113b, 113c, and 113d of the high-frequency coils 111 may be connected to the heating unit 110 via a support member (not shown).

It is preferable that the plurality of high-frequency coils 111 are moved at velocities equal to each other in the horizontal plane.

(Cooling unit)

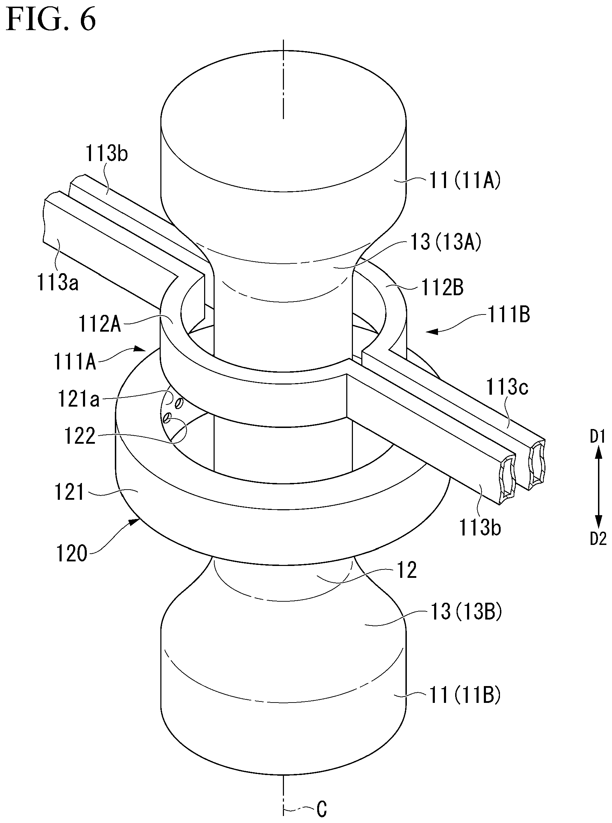

The cooling unit 120 is disposed behind the heating unit 110 in a relative movement direction. The relative movement direction means a direction in which the heating unit 110 is moved relative to the shaft-like body 10 in the axial direction during traverse hardening. In the case of the present embodiment, the cooling unit 120 is disposed below the heating unit 110 as shown in FIG. 1 since the heating unit 110 performs traverse hardening while moving in a direction of D1 shown in FIG. 1. FIG. 6 shows a positional relationship between the heating unit 110 and the cooling unit 120 and the shaft-like body 10 of the present embodiment.

The cooling unit 120 is formed in an annular shape in the present embodiment. The cooling unit 120 has an internal space through which the shaft-like body 10 can be inserted. A plurality of spray nozzles 122, which are spray portions, are formed on an inner circumferential surface 121a of the cooling ring 121 of the cooling unit 120, which faces the internal space, to be separated from each other in the circumferential direction. A cooling medium can be sprayed from each spray nozzle 122 toward the internal space. The shape of the cooling unit 120 is not limited to an annular shape shown in FIG. 6, and may be a circular shape, an elliptical shape, a rectangular shape, or the like in the horizontal plane perpendicular to the up-down direction.

A pump (not shown) is connected to the cooling unit 120. The pump supplies a cooling medium Cl to the cooling unit 120. The cooling medium C1 supplied to the cooling ring 121 of the cooling unit 120 is sprayed toward the shaft-like body 10 through the plurality of spray nozzles 122 and cools the shaft-like body 10. The cooling medium Cl is, for example, water, oil, an aqueous solution equivalent to oil, or the like. For example, the pump is controlled by the control unit 160, so that the amount of the cooling medium Cl to be sprayed can be adjusted.

In the traverse hardening apparatus 100 according to the present embodiment, the shaft-like body 10 inserted inside the plurality of high-frequency coils 111 is rotated around the axis of the shaft-like body 10 relative to the plurality of high-frequency coils 111 and the plurality of high-frequency coils 111 are moved relative to the shaft-like body 10 in the axial direction of the shaft-like body 10, such that the traverse hardening is performed while a plurality of heating regions (a heating region A and a heating region B) formed on a surface 10a of the shaft-like body 10 by the plurality of high-frequency coils 111 are moved. Further, in the traverse hardening apparatus 100 according to the present embodiment, the control unit 160 performs a control to change at least one of a movement velocity vl of the plurality of high-frequency coils 111 relative to the shaft-like body 10 in the axial direction and a rotational velocity of the shaft-like body 10 relative to the plurality of high-frequency coils 111 such that a plurality of heating zones (a heating zone a and a heating zone b) through which the plurality of heating regions pass overlap with each other or are adjacent to each other.

The heating regions (the heating regions A and B) are regions in which an induction current is generated in the shaft-like body 10 due to the supply of a current to the high-frequency induction portion 112A or 112B and Joule heat is generated in the shaft-like body 10 due to the electric resistance of the shaft-like body 10. An appropriate heating temperature in the heating region, that is, a temperature at which a hardness after hardening is highest, varies depending on a material of the shaft-like body 10. However, for example, a region in which a temperature is higher than a temperature, at which austenitizing is completed in general steel during a temperature rise caused by heating, by 50°C or higher is defined as the heating region. Specifically, a region of the surface 10a of the shaft-like body 10 in which a temperature is 850°C or higher is defined as the heating region.

A length of each of the heating regions (the heating regions A and B) of the shaft-like body 10 in the axial direction is denoted by T. T is set to the maximum length of the heating region in the axial direction. Further, the length of each of the heating regions (the heating regions A and B) in the circumferential direction of the shaft-like body 10 is denoted by wc. wc is set to the maximum length in the circumferential direction of the shaft-like body 10. The range of each of the heating regions (the heating regions A and B) changes depending on a distance between the shaft-like body 10 and the high-frequency coil 111, a value of the high-frequency current supplied to the high-frequency coil 111, a material of the shaft-like body 10, and the like.

For example, in a case where traverse hardening is performed using the two high-frequency coils 111, that is, the high-frequency coils 111A and 111B as in an example of the present embodiment, two heating regions (the heating regions A and B) are formed by the respective high-frequency coils 111. The number of the heating regions corresponds to the number of the high-frequency coils 111. Since the plurality of the high-frequency coils 111 are disposed such that the positions thereof in the axial direction of the shaft-like body 10 are the same, the positions of the heating regions A and B in the axial direction of the shaft-like body 10 are the same. The distance in the circumferential direction between the heating regions adjacent to each other in the circumferential direction of the shaft-like body 10 is denoted by wo. wo denotes a distance between end portions, which face each other, of the adjacent heating regions, and is defined as a distance along the surface 10a of the shaft-like body 10 in the circumferential direction of the shaft-like body 10. From the viewpoint of uniform heating, it is preferable that wo is 0 or more.

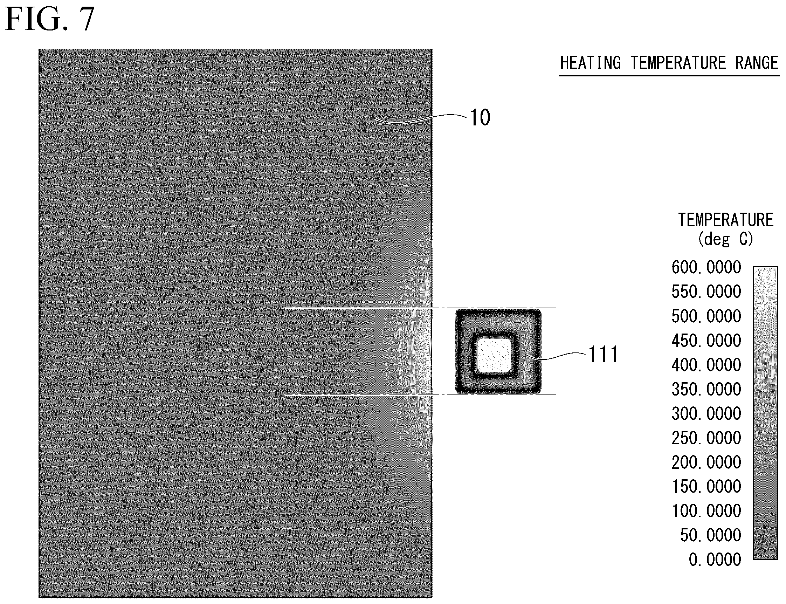

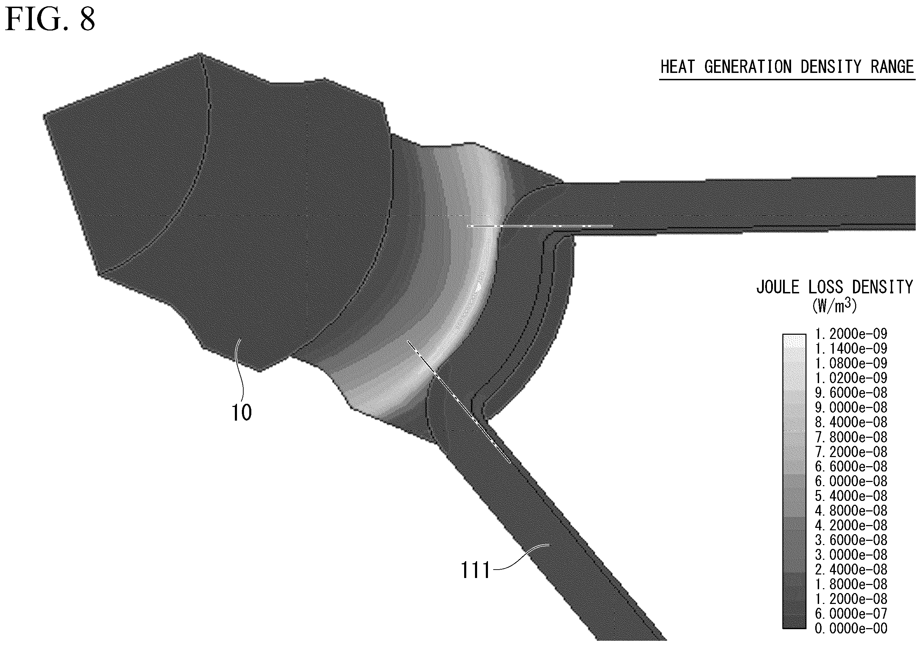

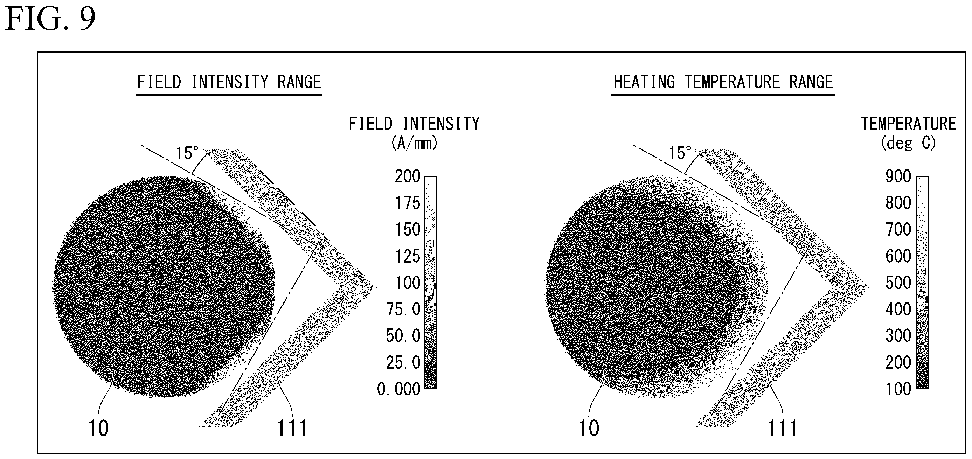

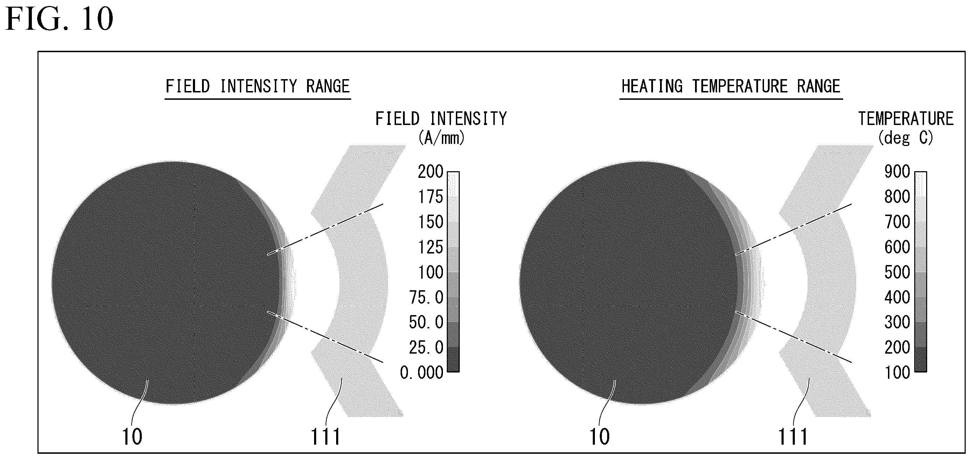

Here, since the dimensions of the heating region correspond to the dimensions of the high-frequency induction portion of the high-frequency coil 111 that generates an induction current, a length T of the heating region in the axial direction of the shaft-like body 10 corresponds to a length T' of the high-frequency coil 111 in the axial direction of the shaft-like body 10 (a range between one-dot chain lines) as shown in FIG. 7. The distance wo in the circumferential direction between the heating regions adjacent to each other in the circumferential direction of the shaft-like body 10 corresponds to a distance wo' in the circumferential direction between the high-frequency induction portion 112 (112A or 112B) of the high-frequency coil 111 (111A or 111B) adjacent to each other in the circumferential direction of the shaft-like body 10 as shown in FIG. 8 (a range between one-dot chain lines). Further, a radius R of the shaft-like body 10 at a certain position in the axial direction corresponds to a radius R' of a circle inscribed in the plurality of the high-frequency coils 111 at the position. A portion of the high-frequency induction portion 112 at a position away from the shaft-like body 10 has a large angle with respect to the surface of the shaft-like body 10 as shown in FIG. 9 and is out of a range that generates magnetic flux lines. Therefore, the portion does not contribute to the heating region. Specifically, in regard to a portion away from a portion of the shaft-like body 10 closest to the high-frequency coil 111, a portion at which an angle of intersection between a direction in which the high-frequency coil 111 extends and the circumferential direction of the shaft-like body facing the high-frequency coil 111 is larger than 15° is not included in the heating region. Even though being away from the portion of the shaft-like body 10 closest to the high-frequency coil 111, a portion at which an angle of intersection between a direction in which the high-frequency coil 111 extends and the circumferential direction of the shaft-like body 10 facing the high-frequency coil 111 is smaller than 15°, such as a middle portion of the high-frequency coil 111 shown in FIG. 10, is included in the heating region (a range between one-dot chain lines).

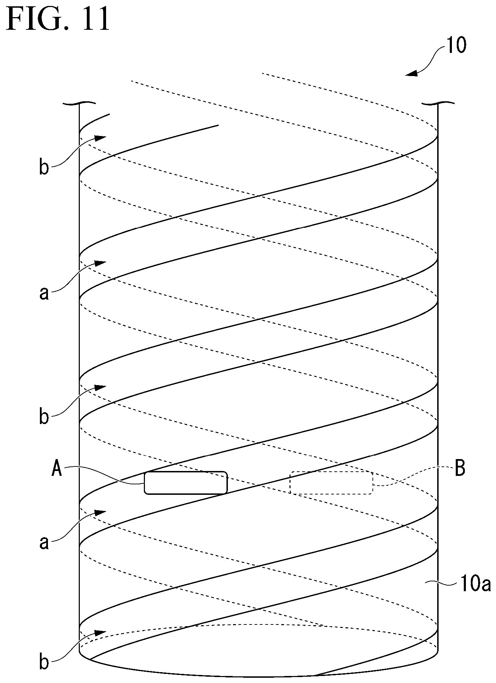

FIG. 11 shows part of the shaft-like body 10, the heating regions A and B that are formed on the surface 10a of the shaft-like body 10 by induction heating using the two high-frequency coils 111, a heating zone a through which the heating region A passes, and a heating zone b through which the heating region B passes. For example, in a case where the high-frequency coils 111A and 111B are disposed symmetrically with respect to the shaft-like body 10 in the horizontal plane as shown in FIG. 2 and the like, the heating regions A and B are also formed symmetrically with respect to the shaft-like body 10.

The shaft-like body 10 and the high-frequency coils 111 are rotated relative to each other around the axis of the shaft-like body 10, that is, in the circumferential direction and are moved relative to each other in the axial direction of the shaft-like body 10. For this reason, each of the heating regions A and B is moved to draw a helical trajectory on the surface 10a of the shaft-like body 10, such that helical heating zones a and b shown in FIG. 11 are generated on the surface 10a of the shaft-like body 10. In the present embodiment, the surface 10a of the shaft-like body 10 means a side surface of the shaft-like body 10.

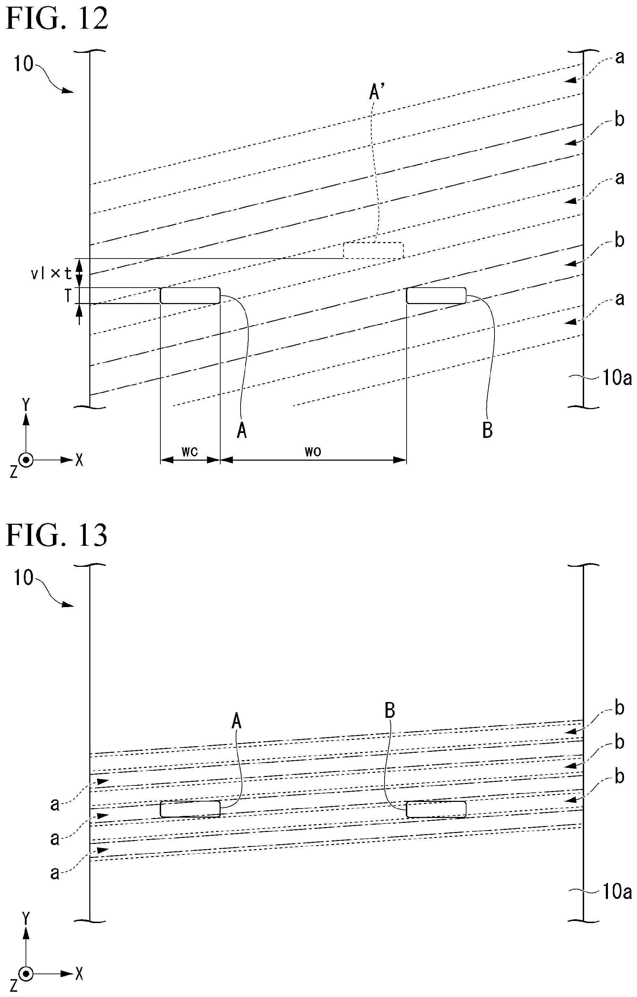

Next, a relationship between the positions of the heating zones a and b will be described. FIG. 12 shows a developed view in which the surface 10a of the shaft-like body 10 is developed. An example in which two heating zones a and b are formed by two heating regions A and B is shown in FIG. 12. In FIGS. 12 to 14, the heating zone a is indicated by a dotted line, and the heating zone b is indicated by a one-dot chain line. An X-coordinate axis shown in FIG. 12 is parallel to the circumferential direction of the shaft-like body 10, a Y-coordinate axis is parallel to the axial direction, and a Z-coordinate axis is parallel to a direction orthogonal to the axis C of the shaft-like body 10, that is, the radial direction of the shaft-like body 10. Further, the X-coordinate axis, the Y-coordinate axis, and the Z-coordinate axis are orthogonal to each other.

In a case where the heating regions A and B adjacent to each other in the circumferential direction of the shaft-like body 10 are moved in a positive direction on the X-coordinate axis and a positive direction on the Y-coordinate axis in FIG. 12, the heating region A passes through the heating zone a shown in FIG. 12 and the heating region B passes through the heating zone b shown in FIG. 12. In the traverse hardening apparatus 100 according to the present embodiment, the two heating zones a and b are controlled to overlap with each other or be adjacent to each other. A state in which the two heating zones a and b do not overlap with each other is shown for the sake of description in the example shown in FIG. 12. In order to make the two heating zones a and b overlap with each other or be adjacent to each other, it is necessary to satisfy conditions to be described below.

In a case where an angular velocity of the shaft-like body 10 relative to the high-frequency coils 111 when the shaft-like body 10 is rotated relative to the high-frequency coils 111 is denoted by $\omega$ and a radius of the shaft-like body 10 at a certain position in the axial direction is R, a rotational velocity (circumferential velocity) $v\theta$ of the surface 10a of the shaft-like body 10 in the circumferential direction at this position in the axial direction is represented by "$v\theta = \omega \times R$". Here, a time t taken for the heating region A to move by a distance wo in the circumferential direction can be represented by "$wo = v\theta \times t$ (Equation A)" using wo and $v\theta$. The time t can also be referred to as the time taken for the heating region A at a certain point of time to move to the position of the heating region B at the same point of time in the circumferential direction of the shaft-like body 10. The movement of the heating region A to the position of the heating region B at the same point of time means that an end portion of the heating region A in the circumferential direction (a direction parallel to the X-coordinate axis) is moved to the position of an end portion of the heating region B facing the end portion of the heating region A in the circumferential direction as shown in FIG. 12. During this time t, the heating region A is moved on the surface of the shaft-like body 10 to a position of a heating region A', which is shown by a one-dot chain line, and forms the heating zone a.

In a case where the movement velocity of the high-frequency coils 111 in the axial direction of the shaft-like body 10 is denoted by vl, the movement velocity of the heating regions A and B in the axial direction on the surface 10a of the shaft-like body 10 is also denoted by vl. A distance l by which the heating region A moves in the axial direction (the positive direction on the Y-coordinate axis) during the time t can be represented by "$1 = vl \times t$". In order to make the heating zone a and the heating zone b overlap with each other or be adjacent to each other, this distance l needs to satisfy a relationship of "$l \leq T$" with regard to the length T of each of the heating regions A and B in the axial direction. That is, the movement velocity vl of the heating regions A and B in the axial direction needs to satisfy a relationship of "$vl \times t \leq T$"

(Expression B).

Here, the following Expression 1 is derived from Equation A and Expression B.

$$(vl/\omega R) \times wo \leq T \;\ldots\; \text{Expression 1}$$

The distance wo and the length T are determined depending on the size of each of the heating regions A and B. Further, R corresponds to the radius of the shaft-like body 10 at a portion where the heating regions A and B are positioned. Therefore, in a case where the angular velocity $\omega$ of the shaft-like body 10 relative to the plurality of the high-frequency coils 111 is constant, the movement velocity vl of the high-frequency coils 111 is changed according to the radius R of the shaft-like body 10 at the portion where each of the heating regions A and B is positioned and control is performed such that Expression 1 is satisfied. Since such control is performed, the two heating zones a and b overlap with each other or are adjacent to each other in a case where traverse hardening is performed.

For example, in a case where the high-frequency coils 111 are moved from the large-diameter portion 11 to the small-diameter portion 12, that is, in a case where the radius R of the shaft-like body 10 at the portion where each of the heating regions A and B is positioned is changed, it is possible to perform hardening while maintaining a state in which the two heating zones a and b overlap with each other or are adjacent to each other by controlling the movement velocity vl of the high-frequency coils 111 with respect to the shaft-like body 10 in the axial direction according to a change in the radius R. In a case where such a configuration is employed, the occurrence of portions where heating is insufficient or portions where heating is relatively excessive in the axial direction and the circumferential direction of the shaft-like body 10 is suppressed, so that irregular heating can be reduced.

Further, in a case where the movement velocity vl is constant, the angular velocity $\omega$ is changed according to the radius R of the shaft-like body 10 at the portion where each of the heating regions A and B is positioned and control is performed such that Expression 1 is satisfied. Since such control is performed, the two heating zones a and b overlap with each other or are adjacent to each other in a case where traverse hardening is performed.

Furthermore, both the movement velocity vl and the angular velocity $\omega$ may be controlled to satisfy Expression 1.

In addition, in a case where the angular velocity of the shaft-like body relative to the plurality of the high-frequency coils is denoted by $\omega$, the movement velocity is denoted by vl, the length of the high-frequency coil in the axial direction is denoted by T', a distance between the high-frequency coils adjacent to each other in the circumferential direction of the shaft-like body is denoted by wo', and a radius of a circle inscribed in the plurality of the high-frequency coils is denoted by R' in the traverse hardening apparatus 100 as described above, the control unit may be capable of controlling the movement velocity and/or the rotational velocity to satisfy Expression 2.

$$(vl/\omega R') \times wo' \leq T' \dots \text{Expression 2}$$

FIG. 13 shows a state in which the two heating zones a and b overlap with each other. In this case, there is an effect that the entire surface can be reliably hardened even though there is a slight difference in heating conditions.

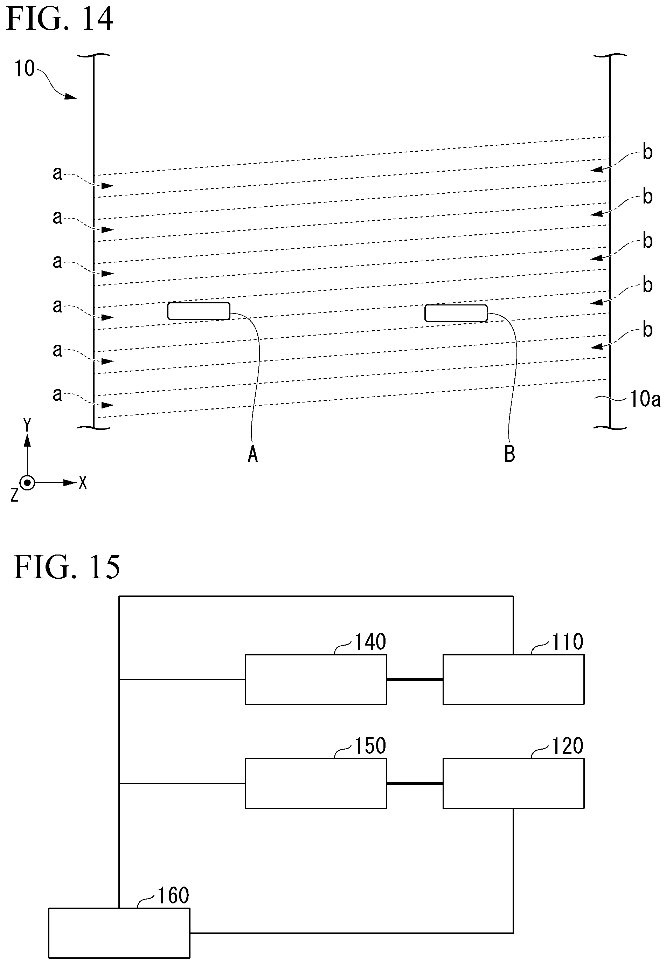

FIG. 14 shows a state in which the two heating zones a and b are adjacent to each other. In an example shown in FIG. 14, the two heating zones a and b are in contact with each other and share boundaries therebetween. In this case, since the movement velocity of the high-frequency coils 111 can be made highest within a constraint range, there is an effect that hardening can be completed in the shortest time. In addition, regardless of the example shown in FIG. 13 or 14, as long as a range is within the range of Expression 1 of the present invention, a combination of the movement velocity vl and the angular velocity ω may be freely specified based on another index by the setting of a hardening depth to a desired value, or the like.

The cooling unit 120 may be controlled to have a constant cooling capacity in accordance with the movement velocity vl such that the flow rate of the cooling medium is increased in a case where the movement velocity vl is high and the flow rate of the cooling medium is reduced in a case where the movement velocity vl is low.

FIG. 15 shows a block diagram of the traverse hardening apparatus 100 according to the present embodiment. It has been described in the example of the present embodiment that the control unit 160 controls the movement of the heating unit-moving device 140 and the cooling unit-moving device 150 in the axial direction, the movement of the high-frequency coils 111 in the horizontal plane, or the amount of the cooling medium C1 to be sprayed by the pump included in the cooling unit 120. However, the traverse hardening apparatus 100 may include a plurality of control units, and be configured such that the respective control units perform the control of the movement of the devices and the coils and the control of the amount of the cooling medium to be sprayed.

Next, a method of performing traverse hardening on the shaft-like body 10 using the traverse hardening apparatus 100 according to the present embodiment will be described.

First, as shown in FIG. 1, the heating unit 110 and the cooling unit 120 are positioned on a lower end side of the shaft-like body 10. Next, a high-frequency current is made to flow in the high-frequency coils 111. Further, the pump is driven to spray the cooling medium Cl from the plurality of spray nozzles 122 of the cooling unit 120. Next, the shaft-like body 10 is rotated by the support unit 130. Then, the motors are driven to move the heating unit-moving device 140 and the cooling unit-moving device 150 upward with respect to the rack member 180. Accordingly, the heating unit 110 and the cooling unit 120 are inserted around the shaft-like body 10 in order, and are moved up with respect to the shaft-like body 10.

In the heating unit 110, an induction current is generated on the surface 10a of the shaft-like body 10 by the high-frequency current supplied to the high-frequency coils 111 and Joule heat is generated due to the electric resistance of the shaft-like body 10, so that a surface layer of the shaft-like body 10 is heated up to a region in which a austenite phase is formed.

Subsequently, the cooling unit 120 is moved up to a portion heated by the heating unit 110, and the cooling medium Cl is sprayed onto the heated portion of the shaft-like body 10. Accordingly, at least the surface layer of the shaft-like body 10 is rapidly cooled, so that a martensitic structure is formed. As the heating unit 110 and the cooling unit 120 are moved up from the lower end of the shaft-like body 10 toward the upper end thereof, heating performed by the heating unit 110 and cooling performed by the cooling unit 120 are sequentially performed. As a result, the surface 10a of the shaft-like body 10 is subjected to induction hardening.

In the traverse hardening method according to the present embodiment, the shaft-like body 10 inserted inside the plurality of high-frequency coils 111 is rotated relative to the plurality of high-frequency coils 111 and the plurality of high-frequency coils 111 are moved relative to the shaft-like body 10 in the axial direction of the shaft-like body 10, so that the traverse hardening is performed while the plurality of heating regions (the heating regions A and B) formed on the surface 10a of the shaft-like body 10 by the plurality of high-frequency coils 111 are moved.

In the traverse hardening method according to the present embodiment, at least one of the movement velocity of the plurality of high-frequency coils 111 and the rotational velocity of the shaft-like body 10 relative to the plurality of high-frequency coils 111 is changed such that the plurality of heating zones (the heating zones a and b) through which the plurality of heating regions pass overlap with each other or are adjacent to each other. In a case where such a configuration is employed, the occurrence of portions where heating is insufficient or portions where heating is relatively excessive in the axial direction and the circumferential direction of the shaft-like body 10 is suppressed, so that irregular heating can be reduced.

The present invention includes the use of a traverse hardening apparatus that performs hardening on a shaft-like body including a small-diameter portion and a large-diameter portion in an axial direction. The traverse hardening apparatus includes a plurality of high-frequency coils and a cooling unit that are provided in the axial direction, and a control unit that can control movement of the plurality of high-frequency coils and the cooling unit. The control unit rotates the shaft-like body inserted inside the plurality of high-frequency coils relative to the plurality of high-frequency coils and moves the high-frequency coils relative to the shaft-like body in the axial direction to perform traverse hardening while moving the plurality of heating regions formed on the surface of the shaft-like body by the plurality of high-frequency coils; and can perform a control to change at least one of a movement velocity of the plurality of high-frequency coils relative to the shaft-like body in the axial direction and a rotational velocity of the shaft-like body relative to the plurality of high-frequency coils such that a plurality of heating zones through which the plurality of heating regions pass overlap with each other or are adjacent to each other.

In a case where an angular velocity of the shaft-like body relative to the plurality of the high-frequency coils is denoted by $\omega$, the movement velocity is denoted by vl, a length of the high-frequency coil in the axial direction is denoted by T', a distance between the high-frequency coils adjacent to each other in a circumferential direction of the shaft-like body is denoted by wo', and a radius of a circle inscribed in the plurality of the high-frequency coils is denoted by R' in the use of the above-described traverse hardening apparatus, the control unit may be capable of controlling the movement velocity and/or the rotational velocity to satisfy Expression 2.

$$(vl/\omega R') \times wo' \leq T' \dots \text{Expression 2}$$

In the use of the above-described traverse hardening apparatus, a temperature of the heating region may be 850°C or higher.

Examples

[Experimental example 1]

An analysis using a numerical simulation was performed to verify irregular heating in a case where traverse hardening is performed on a shaft-like body using a traverse hardening apparatus including a plurality of high-frequency coils. A column made of carbon steel and having a radius of 100 mm was used as the shaft-like body. The length of the high-frequency coil in the axial direction of the shaft-like body was set to 20 mm. The plurality of high-frequency coils were moved by 25 mm in a direction away from the shaft-like body to correspond to the outer diameter of the shaft-like body, and the radius of a circle inscribed in the plurality of high-frequency coils in a state in which the plurality of high-frequency coils were closest to each other was set to 110 mm. The distance between the high-frequency induction portions of the adjacent high-frequency coils in this case was 60 mm. The number of the high-frequency coils was set to 3.

A movement velocity of the plurality of high-frequency coils relative to the shaft-like body in the axial direction of the shaft-like body was set to 10 mm/sec. A rotational velocity (angular velocity) of the high-frequency coil relative to the shaft-like body was changed in each section having a length of 10 cm in the axial direction of the shaft-like body as follows.

Section A in a length range of 0 cm to 10 cm: 0.225 rad/sec
Section B in a length range of 10 cm to 20 cm: 0.375 rad/sec
Section C in a length range of 20 cm to 30 cm: 0.525 rad/sec
Section D in a length range of 30 cm to 40 cm: 0.675 rad/sec

In the sections A and B, the movement velocity and the angular velocity of the high-frequency coils do not satisfy Expression 1 and a plurality of heating zones through which a plurality of heating regions pass do not overlap with each other. However, in the sections C and D, the movement velocity and the angular velocity of the high-frequency coils satisfy Expression 1 and the plurality of heating zones overlap with each other.

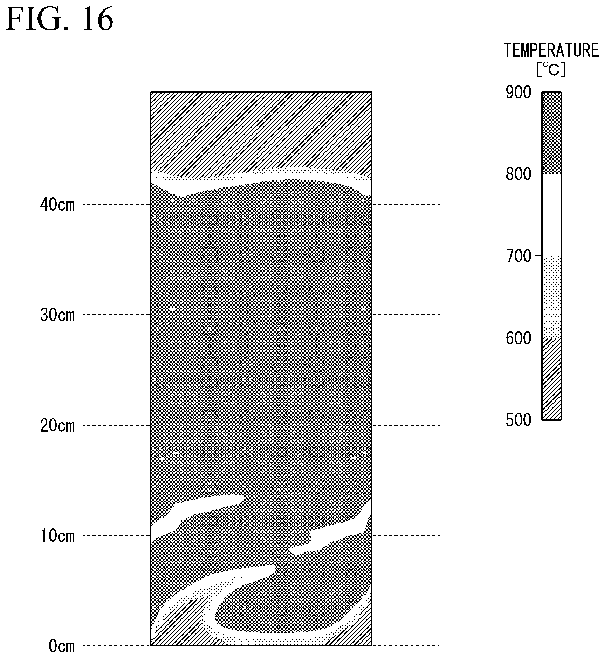

FIG. 16 shows results of the analysis. As can be seen from FIG. 16, irregular heating occurs in the sections A and B, but irregular heating does not occur and uniform heating can be performed in the sections C and D.

[Experimental example 2]

In Experimental example 2, the radius of the shaft-like body and the shape of the high-frequency coil were changed and the same numerical simulation as that in Experimental example 1 was performed. A column made of carbon steel and having a radius of 50 mm was used as the shaft-like body. The length of the high-frequency coil in the axial direction of the shaft-like body was set to 20 mm. The plurality of high-frequency coils were moved by 28 mm in a direction away from the shaft-like body to correspond to the outer diameter of the shaft-like body, and the radius of a circle inscribed in the plurality of high-frequency coils in a state in which the plurality of high-frequency coils were closest to each other was set to 60 mm. A distance between the high-frequency induction portions of the adjacent high-frequency coils in this case was 50 mm. The number of the high-frequency coils was set to 3.

A movement velocity of the plurality of high-frequency coils relative to the shaft-like body in the axial direction of the shaft-like body was set to 10 mm/sec. A rotational velocity (angular velocity) of the high-frequency coil relative to the shaft-like body was changed in each section having a length of 10 cm in the axial direction of the shaft-like body as follows.

Section in a length range of 0 cm to 10 cm: 0.45 rad/sec
Section in a length range of 10 cm to 20 cm: 0.75 rad/sec
Section in a length range of 20 cm to 30 cm: 1.05 rad/sec
Section in a length range of 30 cm to 40 cm: 1.35 rad/sec

In the section A, the movement velocity and the angular velocity of the high-frequency coils do not satisfy Expression 1 and a plurality of heating zones through which a plurality of heating regions pass do not overlap with each other. In the section B, the movement velocity and the angular velocity of the high-frequency coils satisfy Expression 1 and the plurality of heating zones are adjacent to each other. Further, in the sections C and D, the movement velocity and the angular velocity of the high-frequency coils satisfy Expression 1 and the plurality of heating zones overlap with each other.

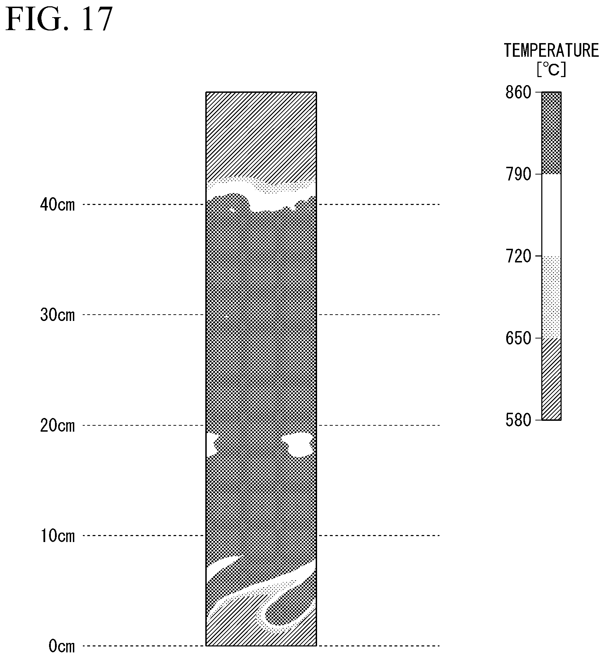

FIG. 17 shows results of the analysis. As can be seen from FIG. 17, irregular heating occurs in the section A but irregular heating is suppressed in the sections B, C, and D.

From the results of these experimental examples, it is understood that, according to the traverse hardening method and the traverse hardening apparatus of the embodiments of the present invention, it is possible to reduce irregular heating in the axial direction and the circumferential direction of the shaft-like body.

INDUSTRIAL APPLICABILITY

According to the traverse hardening method and the traverse hardening apparatus of the embodiments of the present invention, it is possible to reduce irregular heating in the axial direction and the circumferential direction of the shaft-like body. Therefore, the industrial values of the traverse hardening method and the traverse hardening apparatus are extremely high.

REFERENCE SIGNS LIST

100 Traverse hardening apparatus
110 Heating unit
111A, 111B, 211A, 211B, 211C High-frequency coil
112A, 112B, 212A, 212B, 212C High-frequency induction portion
113a, 113b, 113c, 113d, 213a, 213b, 213c, 213d, 213e, 213f Conductive portions
120 Cooling unit
130 Support unit
140 Heating unit-moving device
150 Cooling unit-moving device
160 Control unit
10 Shaft-like body

11A, 11B Large-diameter portion
12 Small-diameter portion
13A, 13B Level difference portion
A, B heating region
a, b heating zone

**Claims**

1. A traverse hardening method of performing hardening on a shaft-like body using a traverse hardening apparatus including a plurality of high-frequency coils, the traverse hardening method comprising:

rotating the shaft-like body inserted inside the plurality of high-frequency coils relative to the plurality of high-frequency coils and moving the plurality of high-frequency coils relative to the shaft-like body in an axial direction to perform traverse hardening while moving a plurality of heating regions formed on a surface of the shaft-like body by the plurality of high-frequency coils; and
changing at least one of a movement velocity of the plurality of high-frequency coils relative to the shaft-like body in the axial direction and a rotational velocity of the shaft-like body relative to the plurality of high-frequency coils such that a plurality of heating zones through which the plurality of heating regions pass overlap with each other or are adjacent to each other.

2. The traverse hardening method according to Claim 1, wherein, in a case where an angular velocity of the shaft-like body relative to the plurality of high-frequency coils is denoted by $\omega$, the movement velocity is denoted by vl, a length of the heating region in the axial direction is denoted by T, a distance between the heating regions adjacent to each other in a circumferential direction of the shaft-like body is denoted by wo, and a radius of the shaft-like body on which the heating regions are positioned is denoted by R, Expression 1 is satisfied,

$$(vl/\omega R) \times wo \leq T \ldots \text{Expression 1.}$$

3. The traverse hardening method according to Claim 1 or 2, wherein a temperature of the heating region is 850°C or higher.

4. A traverse hardening apparatus that performs hardening on a shaft-like body, the traverse hardening apparatus comprising:

a plurality of high-frequency coils and a cooling unit that are provided in an axial direction; and a control unit that is configured to control movement of the plurality of high-frequency coils and the cooling unit,

wherein the control unit is configured to rotate the shaft-like body inserted inside the plurality of high-frequency coils relative to the plurality of high-frequency coils and moves the high-frequency coils relative to the shaft-like body in the axial direction to perform traverse hardening while moving a plurality of heating regions formed on a surface of the shaft-like body by the plurality of high-frequency coils, and perform a control to change at least one of a movement velocity of the plurality of high-frequency coils relative to the shaft-like body in the axial direction and a rotational velocity of the shaft-like body relative to the plurality of high-frequency coils such that a plurality of heating zones through which the plurality of heating regions pass overlap with each other or are adjacent to each other.

5. The traverse hardening apparatus according to Claim 4,

wherein, in a case where an angular velocity of the shaft-like body relative to the plurality of high-frequency coils is denoted by $\omega$, the movement velocity is denoted by v1, a length of the high-frequency coil in the axial direction is denoted by T', a distance between high-frequency induction portions of the high-frequency coils adjacent to each other in a circumferential direction of the shaft-like body is denoted by wo', and a radius of a circle inscribed in the plurality of high-frequency coils is denoted by R', the control unit is configured to control the movement velocity and/or the rotational velocity to satisfy Expression 2,

$$(\text{vl}/\omega\text{R'}) \times \text{wo'} \leq \text{T'} \ldots \text{Expression 2.}$$

6. The traverse hardening apparatus according to Claim 4 or 5,

wherein a temperature of the heating region is 850°C or higher.

# FIG. 1

FIG. 2

FIG. 3

## FIG. 4

## FIG. 5

# FIG. 6

FIG. 7

HEATING TEMPERATURE RANGE

10

111

TEMPERATURE
(deg C)

600.0000
550.0000
500.0000
450.0000
400.0000
350.0000
300.0000
250.0000
200.0000
150.0000
100.0000
50.0000
0.0000

EP 4 589 029 A1

FIG. 8

HEAT GENERATION DENSITY RANGE

JOULE LOSS DENSITY
$(W/m^3)$

1.2000e-09
1.1400e-09
1.0800e-09
1.0200e-09
9.6000e-08
9.0000e-08
8.4000e-08
7.8000e-08
7.2000e-08
6.6000e-08
6.0000e-08
5.4000e-08
4.8000e-08
4.2000e-08
3.6000e-08
3.0000e-08
2.4000e-08
1.8000e-08
1.2000e-08
6.0000e-07
0.0000e-00

10

111

EP 4 589 029 A1

## FIG. 9

EP 4 589 029 A1

# FIG. 10

EP 4 589 029 A1

# FIG. 11

FIG. 12

FIG. 13

# FIG. 14

# FIG. 15

FIG. 16

TEMPERATURE
[°C]

900

800

700

600

500

40cm

30cm

20cm

10cm

0cm

FIG. 17

## INTERNATIONAL SEARCH REPORT

| International application No. |
|---|
| **PCT/JP2022/034239** |

| A. | CLASSIFICATION OF SUBJECT MATTER |
|---|---|

*C21D 9/28*(2006.01)i; *C21D 1/10*(2006.01)i
FI:    C21D9/28 A; C21D9/28 B; C21D1/10 H

According to International Patent Classification (IPC) or to both national classification and IPC

| B. | FIELDS SEARCHED |
|---|---|

Minimum documentation searched (classification system followed by classification symbols)

C21D9/28; C21D9/00; C21D1/00-1/84; C21D11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 6-330178 A (FUJI ELECTRONICS INDUSTRY CO., LTD.) 29 November 1994 (1994-11-29)<br>paragraphs [0006], [0015]-[0026], fig. 2, 4 | 1, 3-4, 6 |
| A | | 2, 5 |
| X | JP 4-13812 A (FUJI ELECTRONICS INDUSTRY CO., LTD.) 17 January 1992 (1992-01-17)<br>claim 1, fig. 1 | 1, 3-4, 6 |
| A | | 2, 5 |
| A | JP 11-269550 A (HONDA MOTOR CO., LTD.) 05 October 1999 (1999-10-05)<br>paragraphs [0013]-[0024], fig. 5 | 1-6 |
| A | WO 2019/181382 A1 (NIPPON STEEL CORP.) 26 September 2019 (2019-09-26) | 1-6 |
| A | CN 103667661 A (FIRST TRACTOR CO., LTD.) 26 March 2014 (2014-03-26) | 1-6 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/034239**

| Patent document cited in search report | | | Publication date (day/month/year) | Patent family member(s) | Publication date (day/month/year) |
|---|---|---|---|---|---|
| JP | 6-330178 | A | 29 November 1994 | (Family: none) | |
| JP | 4-13812 | A | 17 January 1992 | (Family: none) | |
| JP | 11-269550 | A | 05 October 1999 | (Family: none) | |
| WO | 2019/181382 | A1 | 26 September 2019 | EP 3770285 A1 | |
| CN | 103667661 | A | 26 March 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008150640 A

- JP 3610457 B